# FASCICULE DE BREVET EUROPEEN

(11) **EP 4 013 682 B1**
(45) Date de publication et mention de la délivrance du brevet: **25.09.2024**
(21) Numéro de dépôt: 20757651.3
(22) Date de dépôt: 06.08.2020
(51) Int. Cl.: B64D 33/04, F02K 3/075, F02K 1/38

(54) **STRUCTURE INTERNE POUR NACELLE DE TURBOMACHINE**
INNERE STRUKTUR FÜR TURBINENTRIEBWERKGONDEL
INTERNAL STRUCUTURE FOR A TURBINE ENGINE NACELLE

(30) Priorité: 16.08.2019 FR 1909234
(43) Date de publication de la demande: 22.06.2022
(73) Titulaire: SAFRAN AIRCRAFT ENGINES, 75015 Paris (FR)
(72) Inventeur: BAUDOIN, Laurent, Louis, Robert, 77550 MOISSY-CRAMAYEL (FR); JODET, Norman, Bruno, André, 77550 MOISSY-CRAMAYEL (FR)
(74) Mandataire: Cabinet Beau de Loménie
(86) Numéro de dépôt international: PCT/FR2020/051441
(87) Numéro de publication internationale: WO 2021/032918

(56) Documents cités:
- US-A1- 2007 245 739
- US-A1- 2008 271 431
- US-A1- 2010 170 220
- US-A1- 2016 047 274

## Description

### Domaine technique

Le présent exposé concerne le domaine des nacelles de turbomachines, montées par exemple sur des aéronefs, et plus particulièrement un perfectionnement apporté à une structure interne pour nacelle de turbomachine.

### Technique antérieure

Une turbomachine d'aéronef est généralement montée dans une nacelle qui assure son maintien structurel en même temps qu'elle apporte des fonctions auxiliaires utiles au fonctionnement de l'aéronef, par exemple un système mécanique d'inverseurs de poussée.

Le document FR 2 966 435 A1 divulgue une nacelle dont la partie arrière présente une structure de ventilation du moteur. Cette ventilation présente une sortie annulaire unique dont la section est sélectivement obturée par un élément mobile, afin d'être adaptée à tous les régimes nominaux en vol aux incidents susceptibles de provoquer une variation de pression dans la structure de ventilation. US 2016047274 divulgue une sortie d'air de refroidissement commandée activement pour une nacelle de moteur d'avion. US 2007/245739 divulgue un turboréacteur destiné à être utilisé dans des avions, comportant une sortie d'échappement comprenant un conduit de sortie servant de conduit pour l'écoulement du fluide depuis un échangeur de chaleur vers une région basse pression, l'extrémité de sortie du conduit de sortie ayant une géométrie variable. US 2010/170220 décrit un turboréacteur à double flux ayant une structure interne fixe munie de passages canalisés. US 2008/271431 décrit une turbomachine à bruit atténué.

Bien qu'une telle nacelle apporte satisfaction, l'amélioration des performances est une préoccupation constante en aéronautique. Il existe donc un besoin pour un nouveau type de structure interne pour nacelle de turbomachine.

### Exposé de l'invention

A cet effet, le présent exposé concerne une structure interne pour nacelle de turbomachine, destinée à entourer au moins une partie d'un compartiment apte à recevoir un générateur de gaz de la turbomachine, la structure interne comprenant une cavité de ventilation dudit compartiment, la cavité de ventilation étant munie d'une sortie de ventilation principale et d'une sortie de ventilation auxiliaire distincte de la sortie de ventilation principale, la structure interne comprenant un organe d'obturation mobile, par rapport à la cavité de ventilation, entre une position de passage et une position d'obturation dans laquelle l'organe d'obturation obture davantage la sortie de ventilation auxiliaire que dans la position de passage.

Le compartiment apte à recevoir le générateur de gaz de la turbomachine, aussi appelé compartiment moteur, est prévu pour recevoir au moins la partie de la turbomachine qui génère des gaz de combustion dont l'énergie est ensuite convertie en énergie mécanique destinée à mouvoir l'aéronef.

Ainsi, la structure interne peut être annulaire et destinée à être disposée autour du compartiment moteur et du générateur de gaz.

La cavité de ventilation peut être formée entre un capot du compartiment moteur et une tuyère. La cavité de ventilation peut comporter des orifices pour le passage d'air de ventilation vers et depuis le compartiment moteur. En d'autres termes, la cavité de ventilation reçoit la circulation d'un flux de ventilation du générateur de gaz. Pour cette raison, le flux circulant dans la cavité est parfois appelé « core vent ».

La sortie de ventilation principale, ou plus simplement sortie principale, comprend une ou plusieurs ouvertures. Sans perte de généralité, on parlera par la suite d'une ouverture. L'ouverture peut être localisée de sorte qu'en régime de fonctionnement normal, les pressions conduisent l'air à passer par l'ouverture dans un sens allant de l'intérieur de la cavité vers l'extérieur de la cavité. En d'autres termes, l'air de la cavité de ventilation peut sortir par l'ouverture en fonctionnement normal, de préférence pour être rejeté en dehors du compartiment moteur.

La sortie de ventilation auxiliaire, ou plus simplement sortie auxiliaire, comprend une ou plusieurs lumières. Sans perte de généralité, on parlera par la suite de plusieurs lumières. Les lumières peuvent être localisées de sorte qu'en régime de fonctionnement normal, les pressions conduisent l'air à passer par les lumières dans un sens allant de l'intérieur de la cavité vers l'extérieur de la cavité. En d'autres termes, abstraction faite de l'organe d'obturation décrit ci-après, l'air de la cavité de ventilation peut sortir par ces lumières, de préférence pour être rejeté en dehors du compartiment moteur.

L'organe d'obturation est prévu pour obturer plus ou moins la sortie auxiliaire afin d'en moduler la section de passage. Ainsi, la sortie auxiliaire présente une première section de passage lorsque l'organe d'obturation est en position de passage, et une deuxième section de passage, réduite par rapport à la première section de passage, lorsque l'organe d'obturation est en position d'obturation. Ainsi, le déplacement de l'organe d'obturation modifie le degré d'obturation de la sortie auxiliaire. La variation de section de passage de la sortie auxiliaire en fonction de la position de l'organe d'obturation permet d'adapter le débit de sortie d'air de la cavité de ventilation au cours des différents régimes de fonctionnement et incidents potentiels tels qu'une rupture de conduite sous pression. On comprend ainsi que la cavité est dépourvue de séparation interne hermétique entre la sortie principale et la sortie auxiliaire : la sortie principale et la sortie auxiliaire débouchent sur un même espace d'écoulement à l'intérieur de la cavité. En d'autres termes, l'écoulement pouvant sortir par la sortie principale entre dans la cavité par les mêmes entrées que l'écoulement qui peut sortir par la sortie auxiliaire.

Contrairement aux dispositifs de l'état de la technique dans lesquels la sortie unique était surdimensionnée pour convenir à ces différents régimes et couvrir les cas d'incidents, dans le présent exposé, grâce au fait que la cavité de ventilation présente une sortie auxiliaire distincte de la sortie principale et dont la section de passage peut être modulée, il est possible d'optimiser le dimensionnement de la sortie principale, sans la surdimensionner. Il s'ensuit un diamètre de structure interne potentiellement réduit, donc une meilleure compacité et une masse réduite ainsi qu'une traînée diminuée. Les performances de la nacelle sont ainsi améliorées.

A l'extrême, dans la position de passage, l'organe d'obturation peut ne pas obturer du tout la sortie auxiliaire. Indépendamment, à l'extrême, dans la position d'obturation, l'organe d'obturation peut obturer complètement la sortie auxiliaire. Chacune de ces caractéristiques permet d'agrandir la plage de réglage de position de l'organe d'obturation et donc de gagner en liberté de dimensionnement, en précision et en performance.

Dans certains modes de réalisation, la structure interne s'étend selon un axe longitudinal et la sortie de ventilation auxiliaire est décalée, par exemple axialement, radialement et/ou tangentiellement, par rapport à la sortie de ventilation principale. La sortie de ventilation auxiliaire peut notamment se trouver en amont de la sortie de ventilation principale, par exemple dans le cas où ladite sortie principale est à l'extrémité aval de la cavité de ventilation.

Dans certains modes de réalisation, l'organe d'obturation est situé à l'intérieur de la cavité de ventilation. Ainsi, l'organe d'obturation est situé hors du compartiment moteur et, par ailleurs, hors de la veine secondaire qui entoure la structure interne. Ainsi, l'organe d'obturation ne perturbe pas les écoulements les plus importants pour la performance aérodynamique de la turbomachine.

L'organe d'obturation comprend une bande présentant des fenêtres et dans la position de passage, lesdites fenêtres sont au moins partiellement en regard de la sortie de ventilation auxiliaire. En d'autres termes, en alignant plus ou moins les fenêtres sur les lumières de la sortie auxiliaire, la sortie auxiliaire laisse passer plus ou moins de débit de ventilation. Les fenêtres peuvent être entièrement circonscrites à l'intérieur de la bande, et/ou se présenter comme des découpes ouvertes sur un bord de la bande. La bande peut être entraînée en coulissement. La bande peut être plane, annulaire ou en portion d'anneau, ou de forme quelconque.

Dans certains modes de réalisation, l'organe d'obturation est mobile en rotation, par exemple autour de l'axe de la turbomachine (axe du compartiment moteur).

Dans certains modes de réalisation, la structure interne comprend un organe de commande configuré pour commander la position de l'organe d'obturation. L'organe de commande peut être un organe passif ; un organe passif peut être entraîné automatiquement par une partie de la turbomachine ou de la nacelle ou encore par un flux qui y circule, sans apport volontaire d'énergie. Alternativement ou en complément, l'organe de commande peut être un organe actif ; un organe actif peut utiliser un actionneur alimenté par un apport d'énergie dédié.

Dans certains modes de réalisation, l'organe de commande comprend au moins un élément profilé configuré pour entraîner l'organe d'obturation vers la position de passage en cas d'augmentation du flux de ventilation dans la cavité de ventilation. L'élément profilé peut être soumis au flux de ventilation dans la cavité de ventilation, ou à un flux dépendant de ce flux de ventilation, et la force exercée par ce flux sur l'élément profilé entraîne l'organe d'obturation vers la position de passage. De tels modes de réalisation sont des exemples d'organe de commande passif. Dans ces modes de réalisation, l'organe de commande s'adapte automatiquement au flux dans la cavité de ventilation, en obturant moins la sortie auxiliaire lorsqu'un flux plus important circule dans la cavité de ventilation.

Dans certains modes de réalisation, l'organe de commande comprend au moins un élément de rappel configuré pour rappeler l'organe d'obturation vers la position d'obturation. La position d'obturation peut former la position de repos de l'organe d'obturation.

Dans certains modes de réalisation, la sortie de ventilation auxiliaire est ménagée d'un côté de la cavité de ventilation opposé audit compartiment. Ainsi, le fait que la sortie auxiliaire soit plus ou moins ouverte ne perturbe pas le refroidissement du compartiment moteur. Le « côté opposé » peut s'étendre notamment dans la direction radiale de la turbomachine.

Le présent exposé concerne également une nacelle de turbomachine comprenant une structure interne telle que précédemment décrite.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une coupe longitudinale d'une turbomachine selon un mode de réalisation.
[Fig. 2] La figure 2 est un schéma en perspective d'une structure interne selon un mode de réalisation, l'organe d'obturation étant en position d'obturation.
[Fig. 3] La figure 3 est un schéma en perspective d'une structure interne selon un mode de réalisation, l'organe d'obturation étant en position de passage.
[Fig. 4] La figure 4 est une vue en section selon le plan IV-IV de la figure 2.
[Fig. 5] La figure 5 est une vue en section selon le plan V-V de la figure 3.

### Description détaillée

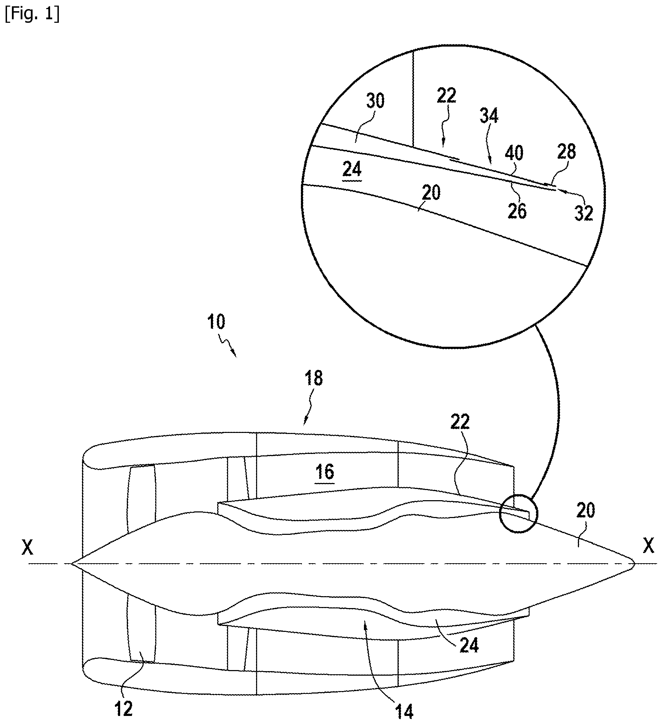

La turbomachine 10 d'axe longitudinal X-X représentée sur la figure 1 est du type à double flux. L'axe longitudinal X-X définit une direction axiale. Une direction radiale est une direction perpendiculaire à cet axe et coupant cet axe. De même, un plan axial est un plan contenant l'axe longitudinal X-X et un plan radial est un plan perpendiculaire à cet axe. Une circonférence s'entend comme un cercle appartenant à un plan radial et dont le centre appartient à l'axe longitudinal X-X. Une direction tangentielle ou circonférentielle est une direction tangente à une circonférence ; elle est perpendiculaire à l'axe longitudinal X-X mais ne passe pas par l'axe.

De façon bien connue en soi, la turbomachine 10 comprend notamment une soufflante 12 qui est entraînée par un générateur de gaz 14 et un canal annulaire de soufflante 16 délimité extérieurement par une nacelle 18.

La turbomachine 10 comprend également un corps annulaire central 20 centré sur l'axe longitudinal X-X. Par ailleurs, la nacelle 18 comprend une structure interne 22, ici annulaire, entourant au moins en partie le compartiment recevant le générateur de gaz 14 (compartiment moteur). Plus précisément, la structure interne 22 est disposée coaxialement autour du corps central 20 de façon à délimiter avec celui-ci un canal annulaire primaire 24 pour l'écoulement d'un flux gazeux du générateur de gaz 14. Ainsi, la structure interne s'étend axialement selon l'axe longitudinal X-X.

Comme illustré sur le détail de la figure 1, la structure interne 22 comprend un capot 26 radialement interne et une tuyère 28 radialement externe. Le capot 26 et la tuyère 28 forment entre eux une cavité de ventilation 30 dans laquelle circule un flux de ventilation du compartiment moteur. La tuyère 28 est prévue radialement à l'intérieur du canal annulaire de soufflante 16 et se distingue donc de la tuyère de la nacelle 18 proprement dite. En outre, comme illustré, la cavité de ventilation 30 se distingue du canal annulaire de soufflante 16 et du canal annulaire primaire 24.

De manière connue en soi, la cavité de ventilation 30 est munie d'une sortie de ventilation principale 32 pour l'évacuation dudit flux de ventilation vers l'aval de la turbomachine 10. La sortie principale 32 est ici formée par un espace séparant le capot 26 de la tuyère 28 à leur extrémité aval. Le flux sortant de la sortie principale 32 est dirigé par la tuyère 28. Dans ce mode de réalisation, la sortie principale 32 comprend une unique ouverture, ici annulaire et coaxiale avec le corps central 20. La sortie principale 32 définit ici un plan, en l'espèce radial, appelé plan d'éjection de la tuyère 28.

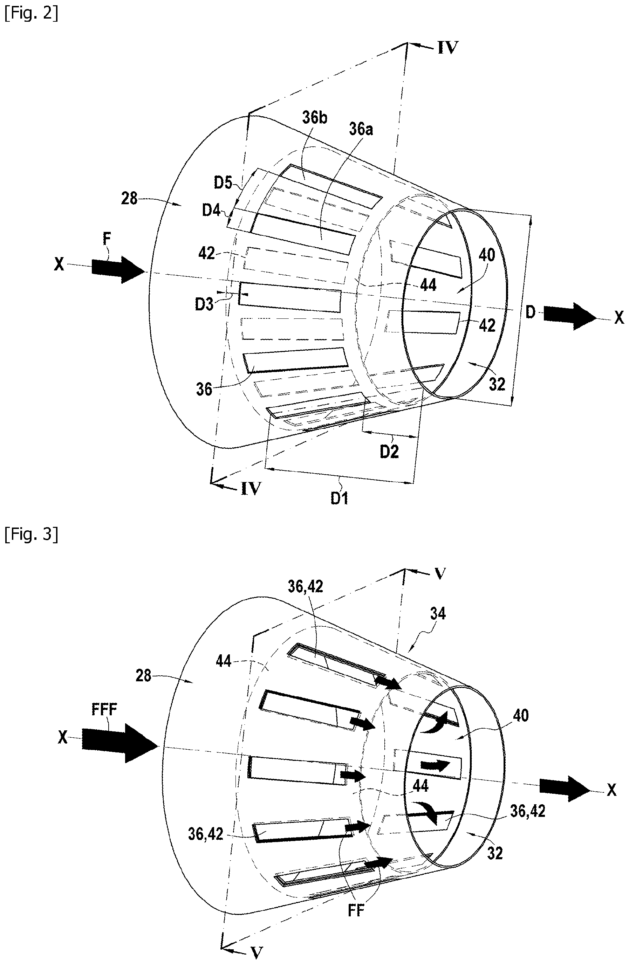

Comme indiqué précédemment, la cavité de ventilation 30 présente en outre une sortie de ventilation auxiliaire 34, également visible sur la figure 2. La figure 2 schématise, en perspective et sans respecter l'échelle, la tuyère 28 et les sorties de ventilation principale 32 et auxiliaire 34. Pour des raisons de clarté, le capot 26, le corps central 20 et d'autres éléments de la structure interne 22 ne sont pas illustrés sur la figure 2.

On note d'emblée que, dans ce mode de réalisation, la sortie auxiliaire 34 est prévue dans la tuyère 28 et non dans le capot 26 ; en d'autres termes, la sortie auxiliaire 34 est ménagée d'un côté de la cavité de ventilation 30 opposé au compartiment moteur. Toutefois, en variante, la sortie auxiliaire 34 pourrait être prévue à un autre endroit de la cavité de ventilation 30, typiquement dans le capot 26.

Dans ce mode de réalisation, la sortie de ventilation auxiliaire 34 comprend une pluralité de lumières 36. Les lumières 36 peuvent être réparties sur la tuyère 28, par exemple dans la direction circonférentielle, de manière régulière ou irrégulière. Les lumières peuvent être de forme quelconque, par exemple rectangulaire comme illustré, ou encore polygonale, circulaire, elliptique, ovale, oblongue, etc. Par exemple, une forme rectangulaire ou oblongue permet une mise en oeuvre à des coûts maîtrisés.

L'extrémité amont des lumières 36 peut être située axialement à une distance D1 du plan d'éjection de la tuyère 28, la distance D1 étant au moins égale au cinquième du diamètre D de la sortie principale 32. Ainsi, les lumières 36 peuvent être suffisamment longues pour que la sortie auxiliaire 34 ait un impact significatif sur le débit sortant de la cavité de ventilation 30. La distance D1 est typiquement de l'ordre de 60 millimètres (mm), plus généralement comprise entre 30 et 90 mm.

L'extrémité aval des lumières 36 peut être située axialement à une distance D2 du plan d'éjection de la tuyère 28, la distance D2 étant supérieure ou égale à 2 mm, de préférence supérieure ou égale à 5 mm, de préférence encore supérieure ou égale à 10 mm. Ainsi, la rigidité de la tuyère dans sa partie aval est conservée malgré la présence des lumières 36.

Ainsi, les lumières 36 peuvent s'étendre sur plusieurs centimètres, voire dizaines de centimètres dans la direction longitudinale X-X. En variante, un réseau de lumières de relativement petites dimensions (par exemple inférieures à 5 centimètres, voire 2 centimètres, voire encore 1 centimètre) présente des avantages sur les aspects aérodynamiques et acoustiques, tout en étant réalisables par des procédés connus et à des coûts raisonnables. Dans le cas d'un réseau de relativement petites lumières 36, ou plus généralement dans le cas où certaines lumières 36 sont axialement décalées par rapport à d'autres, les considérations précédentes s'appliquent aux lumières 36 les plus en amont et les plus en aval, respectivement.

Il ressort de ce qui précède et de la figure 2 que la sortie de ventilation auxiliaire 34 est axialement décalée par rapport à la sortie de ventilation principale 32. En l'espèce, les lumières 36 sont en amont de la sortie principale 32, la sortie principale 32 étant prévue à l'extrémité aval de la tuyère 28.

Par ailleurs, la structure interne 22 comprend un organe d'obstruction 40. L'organe d'obstruction 40 est monté mobile par rapport à la cavité de ventilation 30. Dans ce mode de réalisation, l'organe d'obstruction 40 comprend une bande, ici conformée en un anneau. La bande présente une ou plusieurs fenêtres 42, en l'occurrence une pluralité de fenêtres 42. Les fenêtres 42 peuvent être circonférentiellement réparties sur la bande, régulièrement ou non. Les fenêtres 42 sont destinées à être positionnées en regard des lumières 36 afin de ménager un passage d'air dans la sortie auxiliaire 34 ; dans ce but, les fenêtres 42 peuvent avoir une forme, une taille et/ou une disposition correspondant à celles des lumières 36, comme illustré sur la figure 3 décrite ci-après. Toutefois, cela n'est aucunement nécessaire et les fenêtres 42 pourraient avoir une forme, une taille ou une disposition différente de celle des lumières 36, dès lors que la superposition au moins partielle des lumières 36 et des fenêtres 42 suffit à ménager ledit passage d'air, selon un dimensionnement à la portée de l'homme du métier.

Les fenêtres 42 peuvent être entourées au moins d'un côté axialement (direction transverse au déplacement de l'organe d'obturation 40), et de préférence axialement de part et d'autre, par des marges 44 dépourvues d'ouvertures. Les marges 44 peuvent augmenter la rigidité de l'organe d'obturation 40 et limiter les fuites. Par exemple, les marges 44 peuvent s'étendre axialement sur une distance D3 supérieure ou égale à 2 mm, de préférence à 5 mm, de préférence encore à 10 mm.

Sur la figure 2, l'organe d'obturation 40 est représenté en position d'obturation. En l'espèce, l'organe d'obturation 40 obture complètement la sortie auxiliaire 34, aux fuites inévitables près. De telles fuites peuvent être réduites, si nécessaires, au moyen de joints d'étanchéité, par exemple des brosses ou des languettes souples ou plus généralement tout moyen d'étanchéité tolérant le mouvement de l'organe d'obturation 40 par rapport à la cavité de ventilation 30. Ces joints d'étanchéité peuvent être prévus, par exemple, sur le pourtour des lumières 36 et/ou des fenêtres 42.

On note que, selon la direction circonférentielle (direction de déplacement de l'organe d'obturation 40), la largeur D4 d'une lumière donnée 36a est inférieure à la distance D5 entre cette lumière 36a et au moins une lumière adjacente 36b. De cette façon, la fenêtre 42 correspondant à la lumière 36a peut être entièrement décalée de ladite lumière 36a et l'organe d'obturation 40 peut obturer complètement ladite lumière 36a.

Dans le présent mode de réalisation, l'organe d'obturation est situé à l'intérieur de la cavité de ventilation 30, donc en l'espèce radialement à l'intérieur de la tuyère 28. Par exemple, la section de passage de l'organe d'obturation 40, abstraction faite des fenêtres 42, peut être réduite de 0.1% à 5% par rapport à la section de passage de la tuyère 28, afin de pouvoir loger l'organe d'obturation 40 radialement à l'intérieur de la tuyère 28. Typiquement, le jeu prévu entre la surface radialement externe de l'organe d'obturation 40 et la surface interne de la tuyère 28 peut être inférieur à 5 mm, de préférence inférieur à 2 mm, de préférence encore inférieur à 1 mm, notamment pour des raisons d'étanchéité.

Par ailleurs, l'organe d'obturation 40 peut être mobile en rotation par rapport à la cavité de ventilation 30 et ici par rapport à la tuyère 28. La structure interne 22 peut être munie de tout système adapté, notamment d'éléments connus en eux-mêmes et non représentés ici tels que des rainures, butées, ailettes, etc., pour assurer la liaison pivot entre l'organe d'obturation 40 et le reste de la structure interne 22. Ces systèmes ou éléments peuvent, selon un exemple, être prévus sur les surfaces complémentaires de la tuyère 28 et/ou de l'organe d'obturation 40.

Comme indiqué précédemment, l'organe d'obturation 40 est configuré pour passer de la position d'obturation, dont un exemple est illustré sur la figure 2, à la position de passage dont un exemple est illustré sur la figure 3. Dans ce mode de réalisation, le déplacement entre la position d'obturation et la position de passage peut s'effectuer par une rotation de l'organe d'obturation 40, ici autour de la direction longitudinale X-X, autrement dit dans la direction circonférentielle. Le passage de l'organe d'obturation 40 en position de passage peut s'effectuer lorsque la cavité de ventilation 30 reçoit un flux de ventilation accru FFF (figure 3). Le flux de ventilation accru est supérieur à un certain seuil, et en particulier supérieur au flux de ventilation nominal F (figure 2) prévu pour le fonctionnement normal de la turbomachine.

Dans la position de passage, l'organe d'obturation 40 obture moins la sortie de ventilation auxiliaire 34 que dans la position d'obturation. En l'espèce, comme illustré sur la figure 3, dans la position de passage, l'organe d'obturation 40 n'obture pas du tout la sortie auxiliaire 34. Cela peut être réalisé, par exemple, par une mise des fenêtres 42 partiellement ou totalement en regard de la sortie auxiliaire 34, et plus particulièrement des lumières 36. Ainsi, comme illustré sur la figure 3, l'excédent de flux de ventilation FF peut être évacué par la sortie auxiliaire 34, tandis que la sortie principale 32 peut rester dimensionnée pour son débit de sortie nominal.

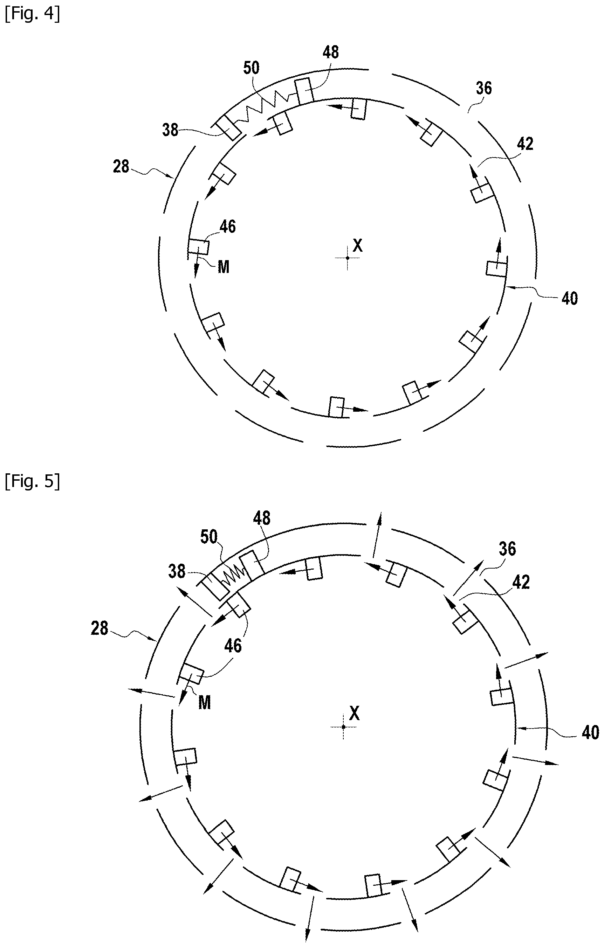

La position de l'organe d'obturation 40, et notamment le passage de l'organe d'obturation 40 entre la position d'obturation et la position de passage, peut être commandée à l'aide d'un organe de commande actif ou passif. Les figures 4 et 5 illustrent schématiquement la mise en oeuvre d'un organe de commande passif selon un mode de réalisation.

Dans cet exemple, l'organe de commande comprend au moins un élément profilé 46 configuré pour entraîner l'organe d'obturation 40 vers la position de passage en cas d'augmentation du flux de ventilation dans la cavité de ventilation 30. Un élément profilé peut être un élément ayant un profil aérodynamique (par exemple une cambrure non nulle) configuré pour générer une portance. En l'espèce, l'organe de commande comprend une pluralité d'éléments profilés 46, à savoir ici des aubages ou ailettes, solidaires de l'organe d'obturation 40, au moins dans la direction de déplacement de ce dernier entre la position d'obturation et la position de passage. Dans ce mode de réalisation, les éléments profilés 46 reçoivent le flux de ventilation F. La portance résultante induit un déplacement M transverse au flux de ventilation, en l'occurrence dans la direction circonférentielle, ce déplacement tendant à amener l'organe d'obturation 40 dans sa position de passage.

Par ailleurs, l'organe de commande peut comprendre au moins un élément de rappel 50 configuré pour rappeler l'organe d'obturation 40 vers la position d'obturation. L'élément de rappel 50 peut être un ressort, comme illustré, un réservoir à volume variable de fluide compressible, un élément élastique, une paire d'aimants, ou tout autre élément apte à exercer une force de rappel. En l'espèce, l'élément de rappel 50 possède une partie fixe solidaire de la tuyère 28 (ou d'une autre partie fixe de la structure interne 22), ici via une butée 38, et une partie mobile solidaire de l'organe d'obturation 40, ici via une butée 48. L'élément de rappel 50, ici le ressort monté en compression, tend à rappeler l'organe d'obturation 40 vers la position d'obturation.

Ainsi, dans ce mode de réalisation, l'organe de commande comprend deux éléments antagonistes tendant à attirer l'organe d'obturation 40 soit dans sa position d'obturation, soit dans sa position de passage. Ces éléments, à savoir respectivement l'élément de rappel 50 et l'élément profilé 46, peuvent être dimensionnés pour que l'équilibre entre les deux soit fonction du flux de ventilation dans la cavité de ventilation 30. Ainsi, dans cet exemple, lorsque le flux de ventilation nominal F ou un flux moindre circule dans la cavité de ventilation 30, ce flux n'est pas suffisant pour entraîner les éléments profilés 46 en rotation contre la force de rappel du ressort en compression, si bien que l'organe d'obturation 40 reste dans sa position d'obturation représentée sur la figure 4.

A l'inverse, lorsque le flux de ventilation (flux de ventilation accru) FFF dépasse une valeur seuil, ce flux devient suffisant pour entraîner les éléments profilés 46 contre la force de rappel de l'élément de rappel 50 et l'organe d'obturation 40 passe dans sa position de passage représentée sur la figure 5. Il s'ensuit que l'organe d'obturation 40 obture moins la sortie auxiliaire 34, notamment les lumières 36, ce qui permet à l'excédent du flux de ventilation FF de sortir de la cavité de ventilation 30 par la sortie auxiliaire 34. Comme on le voit sur la figure 5, les butées 38, 48 respectives de la tuyère 28 et de l'organe d'obturation 40, en venant l'une contre l'autre (abstraction faite de la longueur minimale de l'élément de rappel 50, le cas échéant), facilitent le bon positionnement relatif des lumières 36 et des fenêtres 42.

L'organe de commande ainsi présenté réalise donc un asservissement de la position de l'organe d'obturation 40 sur l'intensité du flux de ventilation devant sortir de la cavité de ventilation 30. Par ailleurs, ce mode de réalisation permet un réglage continu de la position de l'organe d'obturation 40 en fonction du flux de ventilation à évacuer.

Dans d'autres modes de réalisation, la position de l'organe d'obturation 40 pourrait être réglée de manière discrète, l'organe d'obturation 40 prenant alors un nombre prédéfini de positions identifiées.

D'autres types d'organes de commande sont envisagés, par exemple des organes de commande actifs tel qu'un actionneur, par exemple de type vérin, configuré pour entraîner en rotation l'organe d'obturation 40. L'actionneur peut être asservi à un capteur de pression dans la cavité de ventilation 30.

Les organes de commande précédemment décrits ont pour point commun d'être réversibles, c'est-à-dire qu'ils permettent le passage de l'organe d'obturation 40 de la position d'obturation à la position de passage et vice versa. Dans la mesure où la sortie auxiliaire 34 est prévue essentiellement pour des points de fonctionnements accidentels, il peut être prévus des organes de commande non réversibles, par exemple un élément de rappel configuré pour rappeler l'organe d'obturation 40 dans sa position de passage, l'organe d'obturation 40 étant par ailleurs maintenu dans la position d'obturation par un élément frangible configuré pour se briser en cas d'augmentation de la pression dans la cavité de ventilation 30 au-delà d'un certain seuil.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. Par exemple, à la place d'une bande conformée en anneau, l'organe d'obturation 40 peut comprendre une ou plusieurs bandelettes individuelles aptes à obturer plus ou moins les lumières 36. Les bandelettes peuvent coulisser indépendamment les unes des autres, par exemple sensiblement axialement le long des lumières 36, pour les obturer. La sortie auxiliaire 34 et l'organe d'obturation 40 peuvent avoir toute forme, taille ou disposition dès lors que l'organe d'obturation obture davantage la sortie de ventilation auxiliaire dans la position d'obturation que dans la position de passage.

Par ailleurs, les directions présentées ci-dessus peuvent bien entendu être adaptées en cas de changement d'orientation et de direction de déplacement de l'organe d'obturation.

Selon un autre exemple, bien que la position d'obturation et la position de passage aient été décrites dans un cas où elles offrent respectivement 0% et 100% de la section de passage de la sortie auxiliaire 34, il est possible de dimensionner l'organe d'obturation 40, la sortie auxiliaire 34 et/ou l'organe de commande de sorte que la position d'obturation et/ou la position de passage offrent une section de passage intermédiaire de la sortie auxiliaire 34, tant que l'organe d'obturation 40 obture davantage la sortie de ventilation auxiliaire 34 dans la position d'obturation que dans la position de passage.

Par ailleurs, bien que le présent exposé ait été détaillé dans le cadre d'une turbomachine d'aéronef à double flux, la structure interne 22 décrite peut s'appliquer à d'autres types de turbomachines et de nacelles.

Plus généralement, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Structure interne (22) pour nacelle (18) de turbomachine (10), destinée à entourer au moins une partie d'un compartiment apte à recevoir un générateur de gaz (14) de la turbomachine (10), la structure interne (22) comprenant une cavité de ventilation (30) dudit compartiment, la cavité de ventilation (30) étant munie d'une sortie de ventilation principale (32) et d'une sortie de ventilation auxiliaire (34) distincte de la sortie de ventilation principale (32), la structure interne (22) comprenant un organe d'obturation (40) comprenant une bande présentant des fenêtres (42), l'organe d'obturation (40) étant mobile, par rapport à la cavité de ventilation (30), entre une position de passage dans laquelle lesdites fenêtres (42) sont au moins partiellement en regard de la sortie de ventilation auxiliaire (34), et une position d'obturation dans laquelle l'organe d'obturation (40) obture davantage la sortie de ventilation auxiliaire (34) que dans la position de passage.

2. Structure interne selon la revendication 1, dans laquelle la structure interne s'étend selon un axe longitudinal (X-X) et la sortie de ventilation auxiliaire (34) est axialement décalée par rapport à la sortie de ventilation principale (32).

3. Structure interne selon la revendication 1 ou 2, dans laquelle l'organe d'obturation (40) est situé à l'intérieur de la cavité de ventilation (30).

4. Structure interne selon l'une quelconque des revendications 1 à 3, dans laquelle l'organe d'obturation (40) est mobile en rotation.

5. Structure interne selon l'une quelconque des revendications 1 à 4, comprenant un organe de commande configuré pour commander la position de l'organe d'obturation (40).

6. Structure interne selon la revendication 5, dans laquelle l'organe de commande comprend au moins un élément profilé (46) configuré pour entraîner l'organe d'obturation (40) vers la position de passage en cas d'augmentation du flux de ventilation dans la cavité de ventilation (30).

7. Structure interne selon la revendication 5 ou 6, dans laquelle l'organe de commande comprend au moins un élément de rappel (50) configuré pour rappeler l'organe d'obturation (40) vers la position d'obturation.

8. Structure interne selon l'une quelconque des revendications 1 à 7, dans laquelle la sortie de ventilation auxiliaire (34) est ménagée d'un côté de la cavité de ventilation (30) opposé audit compartiment.

9. Nacelle de turbomachine (18) comprenant une structure interne (22) selon l'une quelconque des revendications 1 à 8.

## Patentansprüche

1. Innenstruktur (22) für die Gondel (18) einer Turbomaschine (10), die dazu bestimmt ist, zumindest einen Teil einer Kammer zu umgeben, die dazu geeignet ist, einen Gasgenerator (14) der Turbomaschine (10) aufzunehmen, wobei die Innenstruktur (22) einen Lüftungshohlraum (30) der Kammer umfasst, wobei der Lüftungshohlraum (30) mit einem Hauptlüftungsauslass (32) und einem Hilfslüftungsauslass (34), der von dem Hauptlüftungsauslass (32) getrennt ist, versehen ist, wobei die Innenstruktur (22) ein Verschlusselement (40) umfasst, das einen Streifen umfasst, der Fenster (42) aufweist, wobei das Verschlusselement (40) in Bezug auf den Lüftungshohlraum (30) zwischen einer Durchgangsposition, in der die Fenster (42) zumindest teilweise dem Hilfslüftungsauslass (34) zugewandt sind, und einer Verschlussposition, in der das Verschlusselement (40) den Hilfslüftungsauslass (34) stärker verschließt als in der Durchgangsposition, bewegbar ist.

2. Innenstruktur nach Anspruch 1, wobei sich die Innenstruktur entlang einer Längsachse (X-X) erstreckt und der Hilfslüftungsauslass (34) axial in Bezug auf den Hauptlüftungsauslass (32) versetzt ist.

3. Innenstruktur nach Anspruch 1 oder 2, wobei sich das Verschlusselement (40) innerhalb des Lüftungshohlraums (30) befindet.

4. Innenstruktur nach einem der Ansprüche 1 bis 3, wobei das Verschlusselement (40) drehbar ist.

5. Innenstruktur nach einem der Ansprüche 1 bis 4, umfassend ein Steuerelement, das dazu ausgestaltet ist, die Position des Verschlusselements (40) zu steuern.

6. Innenstruktur nach Anspruch 5, wobei das Steuerelement zumindest ein Profilelement (46) umfasst, das dazu ausgestaltet ist, das Verschlusselement (40) in die Durchgangsposition zu treiben, wenn der Lüftungsfluss in dem Lüftungshohlraum (30) zunimmt.

7. Innenstruktur nach Anspruch 5 oder 6, wobei das Steuerelement zumindest ein Vorspannelement (50) umfasst, das dazu ausgestaltet ist, das Verschlusselement (40) in die Verschlusssituation vorzuspannen.

8. Innenstruktur nach einem der Ansprüche 1 bis 7, wobei der Hilfslüftungsauslass (34) an einer Seite des Lüftungshohlraums (30) vorgesehen ist, die der Kammer gegenüberliegt.

9. Turbomaschinengondel (18), umfassend eine Innenstruktur (22) nach einem der Ansprüche 1 bis 8.

## Claims

1. An internal structure (22) for a turbomachine (10) nacelle (18), the internal structure being intended to surround at least one part of a compartment capable of receiving a gas generator (14) of the turbomachine (10), the internal structure (22) comprising a ventilation cavity (30) of said compartment, the ventilation cavity (30) being provided with a main ventilation outlet (32) and an auxiliary ventilation outlet (34) separate to the main ventilation outlet (32), the internal structure (22) comprising a shut-off member (40) comprising a band having windows (42), the shut-off member (40) being movable, relative to the ventilation cavity (30), between a flow position in which said windows (42) are at least partially facing the auxiliary ventilation outlet (34), and a shut-off position in which the shut-off member (40) shuts off the auxiliary ventilation outlet (34) to a greater extent than in the flow position.

2. The internal structure according to claim 1, wherein the internal structure extends according to a longitudinal axis (X-X) and the auxiliary ventilation outlet (34) is axially offset relative to the main ventilation outlet (32).

3. The internal structure according to claim 1 or 2, wherein the shut-off member (40) is situated inside the ventilation cavity (30).

4. The internal structure according to any one of claims 1 to 3, wherein the shut-off member (40) is movable in rotation.

5. The internal structure according to any one of claims 1 to 4, comprising a control member configured to control the position of the shut-off member (40).

6. The internal structure according to claim 5, wherein the control member comprises at least one profiled element (46) configured to drive the shut-off member (40) towards the flow position in case of an increase in the ventilation flow in the ventilation cavity (30).

7. The internal structure according to claim 5 or 6, wherein the control member comprises at least one return element (50) configured to bias the shut-off member (40) back towards the shut-off position.

8. The internal structure according to any one of claims 1 to 7, wherein the auxiliary ventilation outlet (34) is arranged to one side of the ventilation cavity (30) opposite said compartment.

9. A turbomachine nacelle (18) comprising an internal structure (22) according to any one of claims 1 to 8.
